# EUROPEAN PATENT APPLICATION

(11) **EP 3 037 911 A1**
(43) Date of publication of application: **29.06.2016**
(21) Application number: 15158674.0
(22) Date of filing: 11.03.2015
(51) Int. Cl.: G06F 1/16, E05D 1/00, H04M 1/02

(54) **Electronic device and bearing structure thereof**

(30) Priority: 25.12.2014 TW 103145385
(71) Applicant: ACER Inc., New Taipei City 22181 (TW)
(72) Inventor: Chen, Hsien-Wei, 22181 New Taipei City (TW); Huang, Yi-Ta, 22181 New Taipei City (TW); Tai, Wen-Chieh, 22181 New Taipei City (TW); Ling, Cheng-Nan, 22181 New Taipei City (TW); Chen, Chun-I, 22181 New Taipei City (TW)
(74) Representative: Altenburg, Bernardus Stephanus Franciscus

(57) **Abstract**

A bearing structure (1) is applied to an electronic device (100), and the electronic device (100) includes a first operation part (110) and a second operation part (120). The bearing structure (1) includes a first fastening end (10), a second fastening end (20), and a plurality of concatenation units (30). The first fastening end (10) is fastened to the first operation part (110). The second fastening end (20) is fastened to the second operation part (120). Each of the concatenation units (30) includes a fastening clip (31) and a fastening axis (32), one of the concatenation units (30) is fastened to the first fastening end (10), and another concatenation unit (30) is fastened to the second fastening end (20). The fastening clip (31) of any one of the concatenation units (30) is fastened to the fastening axis (32) of another neighboring concatenation unit (30).

## Description

### BACKGROUND OF THE INVENTION

### Field of the Invention

The present invention relates to a bearing structure; more particularly, the present invention relates to a bearing structure which allows the display angle of the electronic device to be more diverse and has the function of being a standardization component.

### Description of the Related Art

In modern society, various types of electronic devices (such as a computer, a cellphone, or a tablet computer) are ubiquitous in daily life. It is also an important issue to connect those electronic devices and various types of external devices (such as a storage device, an input/output device, or a power supply) together to accomplish various tasks. Of the various types of electronic devices, the notebook computer is among the most popular for consumers because the notebook computer provides great convenience and great practicality. A notebook computer of the prior art has a screen, a keyboard and a cylindrical bearing. The screen and the keyboard are combined via the cylindrical bearing. Via the cylindrical bearing, the screen can be closed to cover the keyboard or be opened relative to the keyboard to allowing the user to view the screen.

However, the cylindrical bearing of the prior art allows the screen to rotate only along a single rotational axis from a closed state to an opened state over a range of 120 to 180 degrees; the screen and the keyboard cannot be positioned at a diverse range of display angles. In addition, currently, the notebook computers of various brands available on the market have various specifications and sizes, and the notebooks of different specification have screens and keyboards of different sizes. Therefore, in order to stably combine screens and keyboards of different sizes, the manufacturer must design a cylindrical bearing which satisfies the different requirements of size and resistance. The necessity of producing cylindrical bearings for different specifications entails more expensive design and material costs. Furthermore, between the electronic devices and between the electronic device and the external device, the user usually uses a cable to connect those devices or directly fasten those devices, but the two connecting methods have some limitations. If the cable is used for such a connection, the cable does not have the resistance for fastening, and the electronic devices at the two ends of the cable cannot be placed at a stable position, such that the user must always adjust the position of the electronic devices. If the electronic devices are directly fastened, the relative position and angle of the electronic devices cannot be adjusted appropriately to meet different usage scenarios, so the user must accept the fastening position for different usage scenarios.

Therefore, there is a need to provide a new bearing which allows the connecting aspect between different electronic devices or between different electronic devices and external devices to be adjusted according to the requirement of the user. The bearing can also be applied as a bearing structure for the notebook computer, and the bearing can be used as a standardization component with great versatility, to save production and management costs.

### SUMMARY OF THE INVENTION

It is an object of the present invention to provide a bearing structure which allows the display angle of an electronic device to be more diverse and has the function of being a standardization component.

To achieve the abovementioned object, the bearing structure of the present invention is applied to an electronic device, and the electronic device includes a first operation part and a second operation part. The bearing structure includes a first fastening end, a second fastening end, and a plurality of concatenation units. The first fastening end is fastened to the first operation part. The second fastening end is fastened to the second operation part. Each of the concatenation units includes a fastening clip and a fastening axis; one of the concatenation units is fastened to the first fastening end, and another concatenation unit is fastened to the second fastening end; the fastening clip of any one of the concatenation units is fastened to the fastening axis of another neighboring concatenation unit.

According to one embodiment of the present invention, the fastening clip is a C-shaped clip, the fastening axis is a cylinder or a sphere, and the fastening clip and the fastening axis of each of the concatenation units are connected to each other.

According to one embodiment of the present invention, the fastening clip is a bilateral C-shaped clip, the fastening axis is a bilateral cylinder or a bilateral sphere, and the fastening clip and the fastening axis of each of the concatenation units are connected to each other.

According to one embodiment of the present invention, the bearing structure further includes a linking-up part, and each concatenation units further includes a hole. The linking-up part passes through the hole of each of the concatenation units.

According to one embodiment of the present invention, the bearing structure further includes a cable. The cable is connected to the first fastening end and the second fastening end.

According to one embodiment of the present invention, the bearing structure further includes a protection part. The protection part covers the plurality of concatenation units.

It is another object of the present invention to provide an electronic device which includes a bearing structure which allows the display angle of the electronic device to be more diverse and has the function of a standardization component.

To achieve the abovementioned object, the electronic device of the present invention includes a first operation part, a second operation part and a bearing structure. The bearing structure includes a first fastening end, a second fastening end and a plurality of concatenation units. The first fastening end is fastened to the first operation part. The second fastening end is fastened to the second operation part. Each concatenation unit includes a fastening clip and a fastening axis, one of the concatenation units being fastened to the first fastening end and another concatenation unit being fastened to the second fastening end; the fastening clip of any one of the concatenation units is fastened to the fastening axis of another neighboring concatenation unit.

### BRIEF DESCRIPTION OF THE DRAWINGS

FIG. 1 illustrates a schematic drawing of the electronic device of the first embodiment of the present invention.
FIG. 2 illustrates an exploded perspective view of the bearing structure of the first embodiment of the present invention.
FIG. 3 illustrates a cross-sectional view of the bearing structure of the first embodiment of the present invention.
FIG. 4 illustrates a schematic drawing of the moving first operation part of the electronic device of the first embodiment of the present invention.
FIG. 5 illustrates a schematic drawing of the bearing structure of the first embodiment of the present invention.
FIG. 6 illustrates a cross-sectional view of the bearing structure of the second embodiment of the present invention.
FIG. 7 illustrates a cross-sectional view of the bearing structure of the third embodiment of the present invention.
FIG. 8 illustrates a cross-sectional view of the bearing structure of the fourth embodiment of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

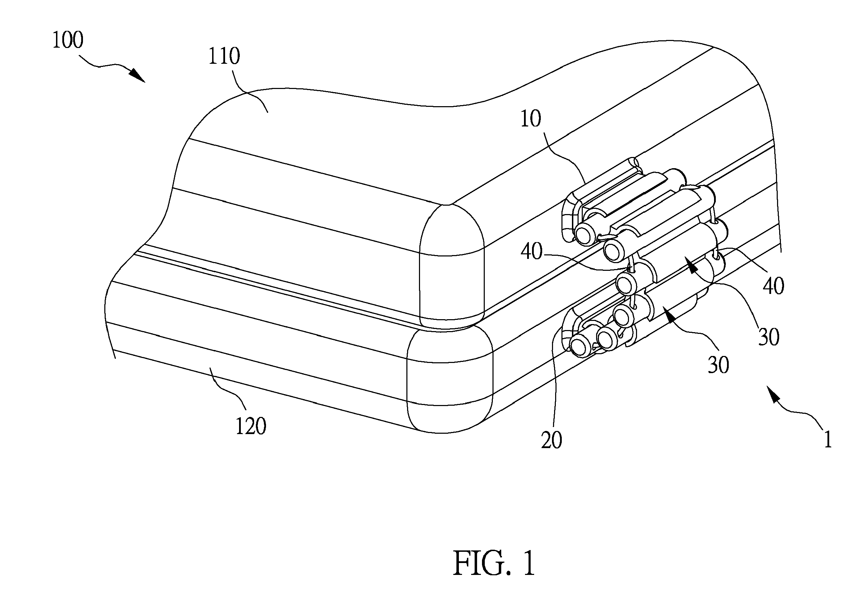

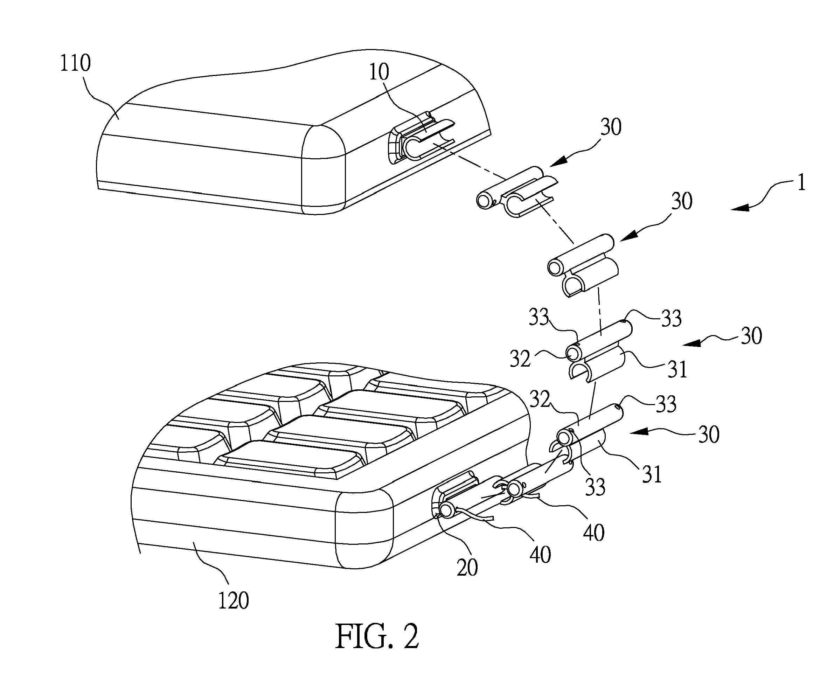

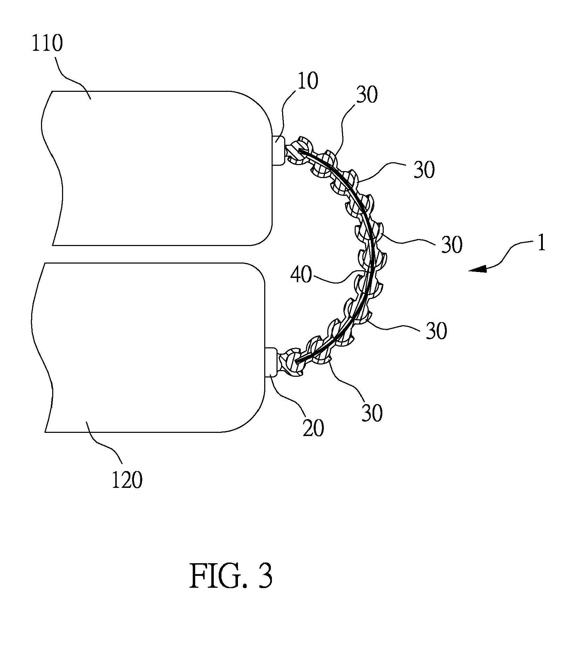

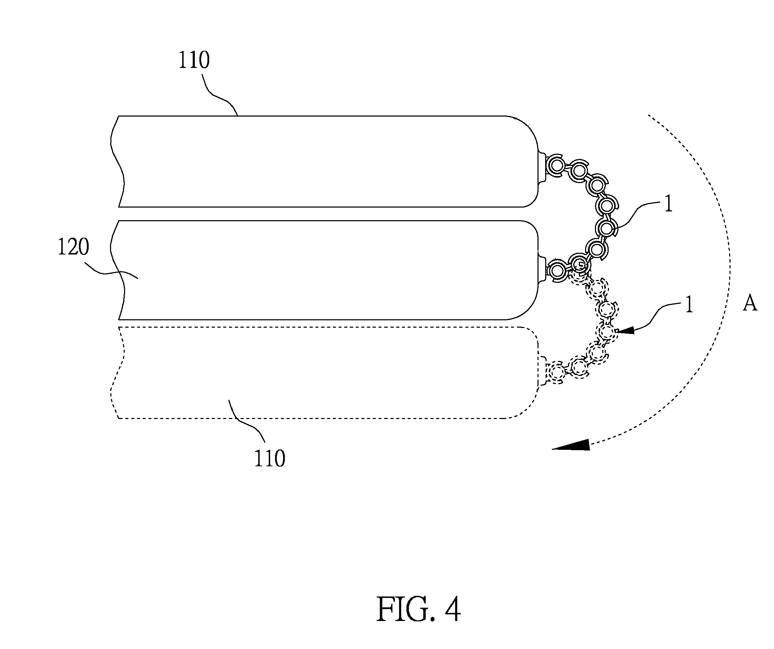

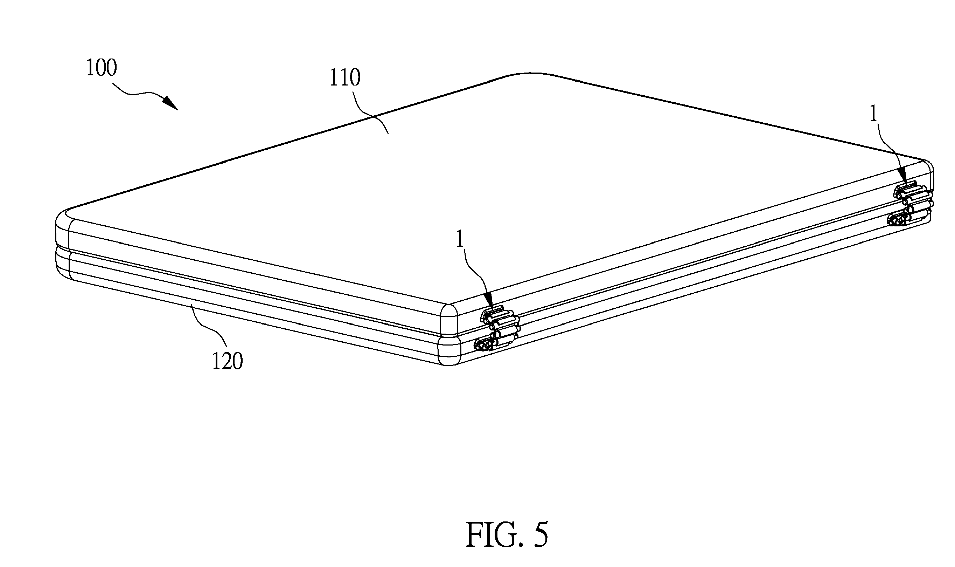

Please refer to FIG. 1 to FIG. 5 about the electronic device and the bearing structure of the first embodiment of the present invention. FIG. 1 illustrates a schematic drawing of the electronic device of the first embodiment of the present invention; FIG. 2 illustrates an exploded perspective view of the bearing structure of the first embodiment of the present invention; FIG. 3 illustrates a cross-sectional view of the bearing structure of the first embodiment of the present invention; FIG. 4 illustrates a schematic drawing of the moving first operation part of the electronic device of the first embodiment of the present invention; FIG. 5 illustrates a schematic drawing of the bearing structure of the first embodiment of the present invention.

As shown in FIG. 1 and FIG. 5, in the first embodiment of the present invention, the electronic device 100 is a notebook computer. The electronic device 100 includes a first operation part 110, a second operation part 120 and at least one bearing structure 1. The first operation part 110 is a displaying device, such as a monitor or a touch screen, for allowing the user to view visual output of the device. The second operation part 120 is a keyboard, for allowing the user to operate the computer. The bearing structure 1 is used for connecting and supporting the first operation part 110 and the second operation part 120. However, the types of the electronic device 100, the first operation part 110 and the second operation part 120 are not limited to the abovementioned description. For example, the first operation part 110 can also be a tablet computer, the second operation part 120 can also be an external keyboard used for the tablet computer, and the tablet computer of the first operation part 110 and the external keyboard of the second operation part 120 can be combined via the bearing structure 1 to form an aspect which is similar to that of a notebook computer. The bearing structure 1, the first operation part 110 and the second operation part 120 of the present invention are detachable. The user can assemble or disassemble the bearing structure 1, the first operation part 110 and the second operation part 120 according to the requirement of the user such that the two ends of the bearing structure 1 can connect to other electronic devices, but the present invention is not limited to the abovementioned description; the bearing structure 1, the first operation part 110 and the second operation part 120 can also be integrally molded.

As shown in FIG. 1 to FIG. 3, in the first embodiment of the present invention, the bearing structure 1 includes a first fastening end 10, a second fastening end 20, a plurality of concatenation units 30 and two linking-up parts 40. The first fastening end 10 is fastened to the first operation part 110. The first fastening end 10 is used for allowing the first operation part 110 and one of the concatenation units 30 to be combined. The second fastening end 20 is fastened to the second operation part 120. The second fastening end 20 is used for allowing the second operation part 120 and one of the concatenation units 30 to be combined. In this embodiment, the first fastening end 10 is a C-shaped clip, and the second fastening end 20 is a cylinder. However, the types of the first fastening end 10 and the second fastening end 20 are not limited to the abovementioned description; the types of the first fastening end 10 and the second fastening end 20 can be the fastening components which are corresponded to each other according to the appearance of the concatenation unit 30.

In the first embodiment of the present invention, each of the concatenation units 30 includes a fastening clip 31, a fastening axis 32 and two holes 33. The fastening clip 31 is a C-shaped clip, and the fastening axis 32 is a cylinder; the fastening clip 31 and the fastening axis 32 of each of the concatenation units 30 are connected to each other. The cylinder of the fastening axis 32 of one of the concatenations unit 30 is fastened to the C-shaped clip of the first fastening end 10, and the C-shaped clip of the fastening clip 31 of another concatenation unit 30 is fastened to the cylinder of the second fastening end 20; furthermore, the C-shaped clip of the fastening clip 31 of any one of the concatenation units 30 is fastened to the cylinder of the fastening axis 32 of another concatenation unit 30; thereby, the plurality of concatenation units 30 are connected to each other, and the first fastening end 10 and the second fastening end 20 are also fastened to the concatenation units 30. The fastening between the first fastening end 10, the second fastening end 20 and each of the concatenation units 30 of the present invention are designed to be close fitting, such that the fastening between the first fastening end 10, the second fastening end 20 and each of the concatenation units 30 can provide a certain amount of resistance for supporting the first operation part 110 and the second operation part 120. The amount of the concatenation units 30 of the present invention can be changed according to the weight and the size of the first operation part 110 and the second operation part 120. For example, if the first operation part 110 and the second operation part 120 are heavy in weight, the user can concatenate more concatenation units 30 so that the bearing structure 1 provides a greater amount of supporting force. If the first operation part 110 and the second operation part 120 are large in size, the user can deploy more sets of the bearing structure 1 on a same or different axis to provide a stable supporting force. In addition, the user can increase the length of the bearing structure 1 to allow the connecting between the first operation part 110 and the second operation part 120 to form many different shapes (such as an S-shape, an I-shape, or an M-shape); the shape is not limited to the L-shape of the prior art. Therefore, the concatenation unit 30 of the present invention can be a standardization component which can be assembled to form the bearing structure 1 having great variety in size, supporting force, and resistance according to the requirement of the manufacturer, to connect to the first operation part 110 and the second operation part 120 of different sizes, weights, and resistance requirements. However, the type of the fastening axis 32 is not limited to the cylinder; for example, the fastening axis 32 can also be a sphere, as shown in FIG. 5. The two holes 33 of each of the concatenation units 30 are respectively located on the two ends of the cylinder of the fastening axis 32. The two holes 33 of each concatenation unit 30 are respectively used for allowing the two linking-up parts 40 to pass through.

As shown in FIG. 1 to FIG. 3, in the first embodiment of the present invention, each of the linking-up parts 40 is connected to the first fastening end 10 and the second fastening end 20, and the linking-up part 40 passes through the holes 33 of each of the concatenation units 30. Via the design of the linking-up part 40 which passes through the holes 33 of each concatenation unit 30, when the user applies force to move the first operation part 110 to cause the first operation part 110 to open or close relative to the second operation part 120, the linking-up part 40 will evenly distribute the force applied by the user and the weight of the first operation part 110 to each of the concatenation units 30, such that each of the concatenation units 30 has the linking-up function. Therefore, each of the concatenation units 30 can support the first operation part 110 and the second operation part 120 via a linking-up method such that the bearing structure 1 can stably support the first operation part 110 and the second operation part 120 at any time.

Via the design of the bearing structure 1 of the present invention, diverse placing positions and angles can be formed between the first operation part 110 and the second operation part 120; as shown in FIG. 4, the user can make the first operation part 110 cover the second operation part 120 and adjust the position according to the requirement of the user, or make the first operation part 110 move to be overlapped under the second operation part 120 along the moving direction A. In addition, the concatenation unit 30 of the bearing structure 1 of the present invention can be a standardization component, which can be assembled to the bearing structure 1 of various sizes and supporting forces according to the requirement of the manufacturer, such that the cost of the bearing structure 1 can be reduced.

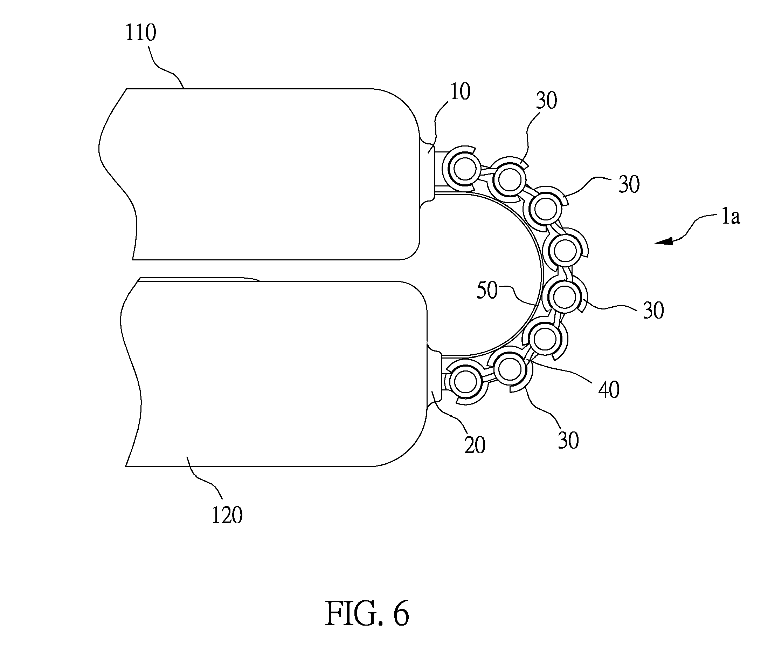

Please refer to FIG. 6 about the electronic device and the bearing structure of the second embodiment of the present invention. FIG. 6 illustrates a cross-sectional view of the bearing structure of the second embodiment of the present invention.

As shown in FIG. 6, the difference between the second embodiment and the first embodiment is that, in the second embodiment of the present invention, the bearing structure 1a further includes a cable 50. The cable 50 is connected to the first fastening end 10 and the second fastening end 20. The cable 50 is used for electrically connecting to the first operation part 110 and the second operation part 120 for allowing the transfer of electronic signals between the first operation part 110 and the second operation part 120.

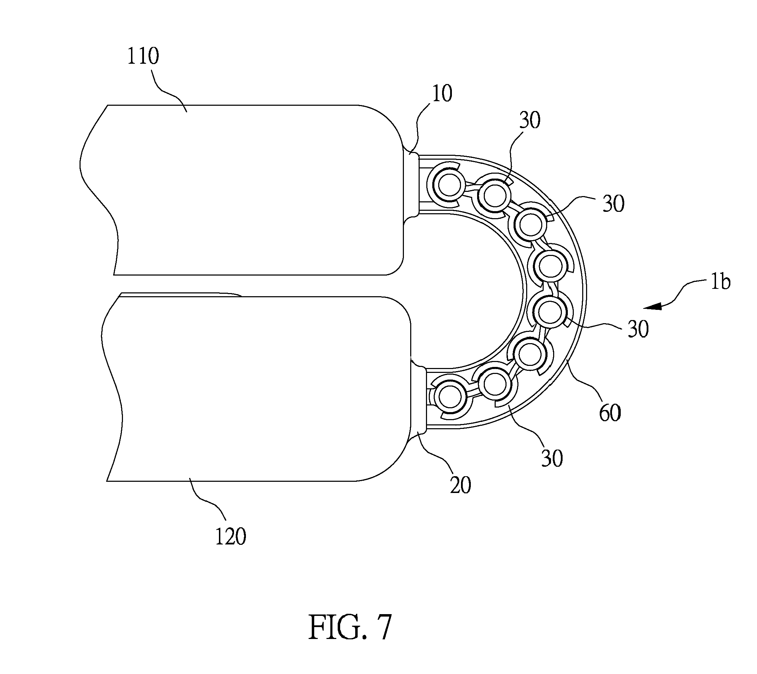

Please refer to FIG. 7 about the electronic device and the bearing structure of the third embodiment of the present invention. FIG. 7 illustrates a cross-sectional view of the bearing structure of the third embodiment of the present invention.

As shown in FIG. 7, the difference between the third embodiment and the first embodiment is that, in the third embodiment of the present invention, the bearing structure 1b further includes a protection part 60. The protection part 60 can be an elastic cloth or a plastic tube; the protection part 60 covers the plurality of concatenation units 30 to protect the concatenation units 30 and provide a smooth appearance for the bearing structure 1b. It is to be known that, in this embodiment, although the bearing structure 1b does not include the cable, it can be designed to have the cable.

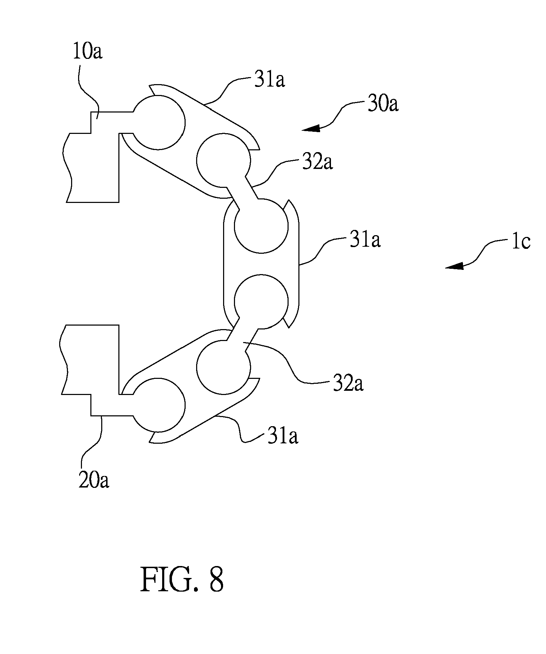

Please refer to FIG. 8 about the electronic device and the bearing structure of the fourth embodiment of the present invention. FIG. 8 illustrates a cross-sectional view of the bearing structure of the fourth embodiment of the present invention.

As shown in FIG. 8, the difference between the fourth embodiment and the first embodiment is that, in the bearing structure 1c of the fourth embodiment of the present invention, the first fastening end 10a and the second fastening end 20a both have the cylinder structure; the fastening clip 31a of the concatenation unit 30a is a bilateral C-shaped clip, and the fastening axis 32a of the concatenation unit 30a is a bilateral cylinder. The C-shaped clip on one side of the bilateral C-shaped clip of the fastening clip 31a is fastened to the cylinder on one side of the bilateral cylinder of the fastening axis 32a, and the C-shaped clip on the other side of the bilateral C-shaped clip of the fastening clip 31a can be fastened to the cylinder on one side of the bilateral cylinder of another fastening axis 32a; furthermore, the cylinders of the first fastening end 10a and the second fastening end 20a are respectively fastened to the C-shaped clip on one side of the bilateral C-shaped clip of one fastening clip 31a. Therefore, each of the concatenation units 30a can be connected to each other and fastened to the first fastening end 10a and the second fastening end 20a. However, the type of the fastening axis 32a is not limited to the bilateral cylinder; it can also be a bilateral sphere.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

In the appended claims, irrespective of a specific reference, all dependent claims refer to any of the preceding claims.

## Claims

1. A bearing structure (1), applied to an electronic device (100), wherein the electronic device (100) comprises a first operation part (110) and a second operation part (120), the bearing structure (1) comprising:
a first fastening end (10), fastened to the first operation part (110);
a second fastening end (20), fastened to the second operation part (120); and
a plurality of concatenation units (30), wherein each concatenation unit (30) comprises a fastening clip (31) and a fastening axis (32),
one of the concatenation units (30) is fastened to the first fastening end (10), and another concatenation unit (30) is fastened to the second fastening end (20); the fastening clip (31) of any one of the concatenation units (30) is fastened to the fastening axis (32) of another neighboring concatenation unit (30).

2. The bearing structure as claimed in Claim 1, wherein the fastening clip (31) is a C-shaped clip, the fastening axis (32) is a cylinder or a sphere, and the fastening clip (31) and the fastening axis (32) of each of the concatenation units (30) are connected to each other.

3. The bearing structure as claimed in Claim 1, wherein the fastening clip (31) is a bilateral C-shaped clip, the fastening axis (32) is a bilateral cylinder or a bilateral sphere, and the fastening clip (31) and the fastening axis (32) of each of the concatenation units (30) are connected to each other.

4. The bearing structure as claimed in Claim 2, further comprising a linking-up part (40), wherein each of the concatenation units (30) further comprises a hole (33) and the linking-up part (40) passes through the hole (33) of each of the concatenation units (30).

5. The bearing structure as claimed in Claim 3, further comprising a linking-up part (40), wherein each of the concatenation units (30) further comprises a hole (33) and the linking-up part (40) passes through the hole (33) of each of the concatenation units (30).

6. The bearing structure as claimed in Claim 1, further comprising a cable (50), wherein the cable (50) is connected to the first fastening end (10) and the second fastening end (20).

7. The bearing structure as claimed in Claim 1, further comprising a protection part (60), wherein the protection part (60) covers the plurality of concatenation units (30).

8. The bearing structure as claimed in Claim 6, further comprising a protection part (60), wherein the protection part (60) covers the plurality of concatenation units (30).

9. An electronic device (100), comprising:a first operation part (110); a second operation part (120); and a bearing structure (1), comprising:
a first fastening end (10), fastened to the first operation part (110);
a second fastening end (20), fastened to the second operation part (120); and
a plurality of concatenation units (30), wherein each concatenation unit (30) comprises a fastening clip (31) and a fastening axis (32), one of the concatenation units (30) is fastened to the first fastening end (10), and another concatenation unit (30) is fastened to the second fastening end (20); the fastening clip (31) of any one of the concatenation units (30) is fastened to the fastening axis (32) of another neighboring concatenation unit (30).

10. The electronic device as claimed in Claim 9, wherein the fastening clip (31) is a C-shaped clip, the fastening axis (32) is a cylinder or a sphere, and the fastening clip (31) and the fastening axis (32) of each of the concatenation units (30) are connected to each other.

11. The electronic device as claimed in Claim 9, wherein the fastening clip (31) is a bilateral C-shaped clip, the fastening axis (32) is a bilateral cylinder or a bilateral sphere, and the fastening clip (31) and the fastening axis (32) of each of the concatenation units (30) are connected to each other.

12. The electronic device as claimed in Claim 10, wherein the bearing structure (1) further comprises a linking-up part (40), each of the concatenation units (30) further comprises a hole (33), and the linking-up part (40) passes through the hole (33) of each of the concatenation units (30).

13. The electronic device as claimed in Claim 11, wherein the bearing structure (1) further comprises a linking-up part (40), each of the concatenation units (30) further comprises a hole (33), and the linking-up part (40) passes through the hole (33) of each of the concatenation units (30).

14. The electronic device as claimed in Claim 9, wherein the bearing structure (1) further comprises a cable (50) and the cable (50) is connected to the first fastening end (10) and the second fastening end (20).

15. The electronic device as claimed in Claim 9 or Claim 15, wherein the bearing structure (1) further comprises a protection part (60) and the protection part (60) covers the plurality of concatenation units (30).
